# EUROPEAN PATENT SPECIFICATION

(11) **EP 4 070 534 B1**
(45) Date of publication and mention of the grant of the patent: **22.04.2026**
(21) Application number: 20702001.7
(22) Date of filing: 24.01.2020
(51) Int. Cl.: H04M 1/02

(54) **FUNCTIONAL HOUSING STRUCTURE FOR AN ELECTRONIC DEVICE**
FUNKTIONSGEHÄUSESTRUKTUR FÜR EINE ELEKTRONISCHE VORRICHTUNG
STRUCTURE DE BOÎTIER FONCTIONNEL POUR UN DISPOSITIF ÉLECTRONIQUE

(43) Date of publication of application: 12.10.2022
(73) Proprietor: Huawei Technologies Co., Ltd., Shenzhen, Guangdong 518129, (CN)
(72) Inventor: PENNANEN, Jouni, 16440 Kista (SE); KOLARI, Mika, 16440 Kista (SE); HUYNH, Ngoc, Skalholtsgatan 9 16440 Kista (SE); KAIJA, Jyri, 16440 Kista (SE)
(74) Representative: Gill Jennings & Every LLP
(86) International application number: PCT/EP2020/051790
(87) International publication number: WO 2021/148137

(56) References cited:
- EP-A1- 2 034 556
- EP-A2- 2 223 789
- US-A1- 2011 149 599
- US-A1- 2013 076 573
- US-A1- 2013 321 220
- US-A1- 2015 103 503

## Description

### TECHNICAL FIELD

The disclosure relates to a functional housing structure for an electronic device.

### BACKGROUND

Future mobile electronic devices need to support an increasing number of components such as sensors, having various functionalities, and antennas, such as millimeter-wave antennas. However, the volume reserved for all additional components in a mobile electronic device is very limited, and the added components should ideally be accommodated in the same volume as existing components. Increasing the volume reserved for the additional components would make the electronic device larger, bulkier, and less attractive to users.

Furthermore, the movement towards very large displays, covering as much as possible of the electronic device, makes the space available for antennas very limited, forcing either the size of the antennas to be significantly reduced, and their performance impaired, or a large part of the display to be inactive.

Additionally, visible components as well as openings in the body of the mobile electronic devices are undesirable since they weaken the mechanical structure of the body, make manufacture and assembly more difficult, and makes the appearance of the device less attractive to users.

US2011/0149599A1 discloses an illuminated housing cover including a light guide and light source sandwiched between an outer light transmissive layer and an inner layer. EP2034556A1, discloses a case that includes a dielectric member made of a first dielectric material, the dielectric member being coated with a coating layer made of a second dielectric material; a wireless communication circuit is housed in the case. US20130321220A1, discloses an electric apparatus that includes a component having a conductive layer in a fixed range in the depth direction, the conductive layer including a particular region that is electromagnetically isolated from other regions. US2015103503A1 discloses an injection molded product in which an electrical connection between a contact pin and an electrode pattern is sufficient. EP2223789A2 discloses an in-mold type RF antenna, the antenna film being configured to be accommodated in a case of a device. US 2013/076573 A1 discusses an electronic device provided with antenna structure that is embedded in a dielectric such as plastic.

### SUMMARY

It is an object to provide an improved housing structure for an electronic device. The foregoing and other objects are achieved by the features of the independent claims. Specifically, the invention is set out in the appended set of claims.

According to a first aspect, there is provided a functional housing structure for an electronic device according to appended claim 1. The housing structure comprising at least a first layer of dielectric or meta material and at least one electronic circuitry arrangement, wherein the at least one electronic circuitry arrangement comprises an antenna radiator, at least part of the electronic circuitry arrangement being embedded in the first layer, by means of the first layer being molded around at least part of the electronic circuitry arrangement.

By integrating functional components into a non-conductive housing, the housing can meet a variety of design as well as functionality requirements. The functional component can be visible, or hidden adjacent the exterior surface of the housing such that it is invisible while it's function remains uninterrupted by the housing or other components. Furthermore, such a housing structure increases the locations available for placing an increasing number of functional components, without affecting the size of the housing structure.

The functional housing structure further comprises a second layer of dielectric or meta material attached to the first layer of dielectric or meta material, at least part of the electronic circuitry arrangement being one of embedded in the second layer and arranged between the first layer and the second layer. This allows the layers of the housing structure as well as the parts of the electronic circuitry arrangement to be added separately and independently inside the first layer of dielectric or meta material.

In a possible implementation form of the first aspect, the housing structure does not comprise any conductive layer or components other than the electronic circuitry arrangement, providing a housing wherein no other components affect the function of the electronic circuitry arrangement.

In a further possible implementation form of the first aspect, the electronic circuitry arrangement comprises a first component, the first component being embedded in the first layer and/or arranged between the first layer and the second layer.

In a further possible implementation form of the first aspect, the electronic circuitry arrangement further comprises at least a second component, the second component being attached to and/or at least partially embedded in the first layer and/or the second layer.

In a further possible implementation form of the first aspect, the electronic circuitry arrangement comprises a capacitive coupling, a galvanic coupling or a galvanic connection.

In a further possible implementation form of the first aspect, the first component is an antenna radiator, and the second component is an antenna feed, allowing antennas to be arranged in a variety of locations across the housing structure, facilitating antenna omnicoverage.

In a further possible implementation form of the first aspect, at least one of the first component and the second component is a sensor, allowing sensors to be arranged in a variety of locations across the housing structure.

In a further possible implementation form of the first aspect, the electronic circuitry arrangement comprises at least one of a parasitic antenna element, a reflector or director for mmWave antenna, a wavetrap for antenna, a transmission line, a power divider, RF balun, filter or diode, a soldering pad, a connector, an IC component, a PCB trace, a CPU, a GPU, a RAM, a switch, a feedline, a resonator, LED or other light source for illumination.

In a further possible implementation form of the first aspect, the second component extends through the second layer, such that the second component can be galvanically connected to additional components enclosed and carried by the housing structure.

In a further possible implementation form of the first aspect, the first layer comprises a first recess, the first component being at least partially arranged in the first recess.

In a further possible implementation form of the first aspect, the second layer comprises a second recess, the second component being at least partially arranged in the second recess.

In a further possible implementation form of the first aspect, the first component and/or the second component is attached to the first layer and/or the second layer by means of adhesive.

In a further possible implementation form of the first aspect, the first layer comprises glass and/or thermoplastic composite, facilitating an easily manufactured first layer which has a seamless outer surface.

In a further possible implementation form of the first aspect, the dielectric or meta material of the second layer is a foil laminated onto the first layer.

In a further possible implementation form of the first aspect, the housing structure comprises further layers of dielectric or meta material.

According to a second aspect, there is provided an electronic device comprising at least a display and a functional housing structure according to the above, wherein the display and the housing structure at least partially form an outer surface of the electronic device.

This and other aspects will be apparent from the embodiments described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 shows a partial cross-sectional view of a functional housing in accordance with one embodiment of the present invention;
Fig. 2 shows a partial cross-sectional view of a functional housing in accordance with one embodiment of the present invention;
Fig. 3 shows a partial cross-sectional view of a functional housing in accordance with one embodiment of the present invention;
Fig. 4 shows a partial cross-sectional view of a functional housing in accordance with one embodiment of the present invention.

### DETAILED DESCRIPTION

In the following description, although numerous features may be designated as optional, it is nevertheless acknowledged that all features defined by claim 1 are not to be read as optional.

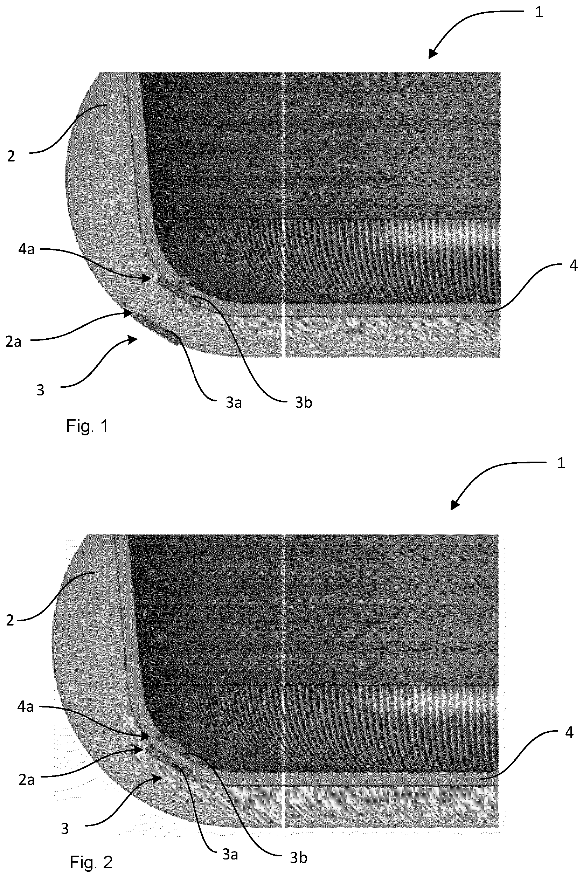

Figs. 1 to 4 show embodiments of a functional housing structure 1 for an electronic device, such as a smartphone, tablet, or other mobile electronic device.

The housing structure 1 comprises at least a first layer 2 of dielectric or meta material and at least one electronic circuitry arrangement 3, wherein the electronic circuit arrangement 3 comprises an antenna radiator.

At least part of the electronic circuitry arrangement 3 is embedded in the first layer 2, by means of the first layer 2 being molded around at least part of the electronic circuitry arrangement 3. In one embodiment, the housing structure 1 does not comprise any conductive layer or components other than the electronic circuitry arrangement 3.

The functional housing structure 1 comprises a second layer 4 of dielectric or meta material as shown in Figs. 1, 2, and 4.

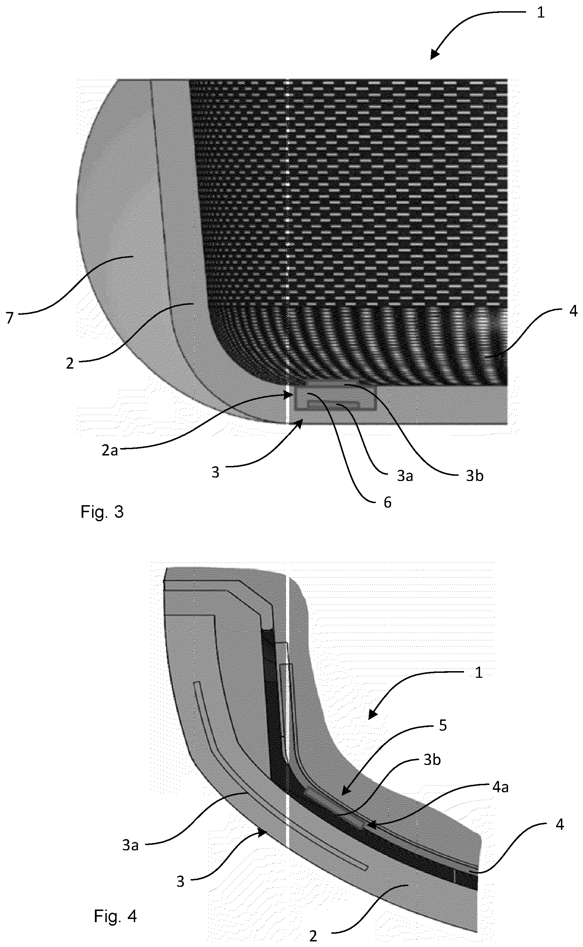

The second layer 4 is attached to the first layer 2 of dielectric or meta material, as shown in Figs. 1 and 2. Furthermore, the first layer 2 and the second layer 4 may be separated by e.g. an air gap, as shown in Fig. 4.

At least part of the electronic circuitry arrangement 3 is embedded in the second layer 4, as shown in Fig. 4, or arranged between the first layer 2 and the second layer 4, as shown in Figs. 1 and 2.

The functional housing structure 1 may comprise further layers 7 of dielectric or meta material, as shown in Fig. 3. One further layer 7, forming an exterior surface of the housing structure 1, may be a scratch-resistant coating.

The first layer 2, the second layer 4, and any further layers 7 may be laminated onto each other, or interconnected by means of adhesive. The layers may be pre-bent, thermoformed, or injection molded to a predetermined shape, preferably a three-dimensional shape as shown in the Figs.

The first layer 2 may comprise glass and/or thermoplastic composite, and may also be transparent or structural plastic. Furthermore, the dielectric or meta material of the second layer 4 may be a foil, e.g. a composite foil, laminated onto the first layer 2.

The electronic circuitry arrangement 3 may comprise a first component 3a which is embedded in the first layer 2 and/or arranged between the first layer 2 and the second layer 4. Fig. 1 shows an embodiment wherein the first component 3a is partially embedded into the first layer 2, adjacent an exterior surface of the housing structure 1. Fig. 2 shows an embodiment wherein the first component 3a is arranged between the first layer 2 and the second layer 4, and wherein the first component 3a may simultaneously be embedded into the first layer 2 and/or the second layer 4. Fig. 3 shows an embodiment wherein the first component 3a is embedded into the first layer 2, in a recess 2a extending from an interior surface of the first layer 2 and the housing structure 1. Fig. 4 shows an embodiment wherein the first component 3a is completely embedded into the first layer 2.

The electronic circuitry arrangement 3 may further comprise at least a second component 3b which is attached to and/or at least partially embedded in the first layer 2 and/or the second layer 4. Fig. 1 shows an embodiment wherein the second component 3b is arranged between the first layer 2 and the second layer 4 while simultaneously being partially embedded in the second layer 4. Fig. 2 shows an embodiment wherein the second component 3b is arranged adjacent an interior surface of the second layer 4, and wherein the second component 3b may simultaneously be embedded into the second layer 4. Fig. 3 shows an embodiment wherein the second component 3b is arranged adjacent an interior surface of the first layer 2. Fig. 4 shows an embodiment wherein the second component 3b is partially embedded in the second layer 4.

The electronic circuitry arrangement 3 may comprise further components (not shown), also arranged between the first layer 2 and the second layer 4, or at least partially embedded into the first layer 2 or the second layer 4.

The electronic circuitry arrangement 3 may furthermore comprise a capacitive coupling, a galvanic coupling or a galvanic connection 5.

The first component 3a and/or the second component 3b may be arranged such that they are invisible or visible to the user, the component forming a decorative element in case it is visible.

The first component 3a and/or the second component 3b may be discrete components attached to the first layer 2 and/or the second layer 4 by means of adhesive 6. The adhesive may fill up the first recess 2a, as shown in Fig. 3, and, optionally, simultaneously attach the second component 3b to the first layer 2.

The electronic circuitry arrangement 3 comprises an antenna radiator and may also comprise at least one of a parasitic antenna element, a reflector or director for mmWave antenna, a wavetrap for antenna, a transmission line, a power divider, RF balun, filter or diode, a soldering pad, a connector, an IC component, a PCB trace, a CPU, a GPU, a RAM, a switch, a feedline, a resonator, LED or other light source for illumination.

In one embodiment, the first component 3a is an antenna radiator, and the second component 3b is an antenna feed. Furthermore, at least one of the first component 3a and the second component 3b may be a sensor.

The first component 3a and/or the second component 3b may be wholly or partially overmolded by the first layer 2 and/or the second layer 4, respectively.

As shown in Fig. 1, the first component 3a may be partially embedded into the first layer 2, adjacent an exterior surface of the housing structure 1, or adhered to the exterior surface of the housing structure 1, such that the first component 3a is visible to the user. As mentioned above, the second component 3b may extend through the second layer 4 as shown in Fig. 1. The second component 3b may be an invisible capacitive antenna feed, e.g. a Shine antenna feed, and the first component 3a may be a visible and decorative capacitive antenna radiator.

As shown in Fig. 2, the first component 3a may be arranged between the first layer 2 and the second layer 4, the first component 3a being, e.g., an invisible capacitive antenna radiator. The second component 3b may be arranged adjacent an interior surface of the second layer 4, being an invisible capacitive antenna feed such as a Shine antenna feed.

The first layer 2 may also comprise a first recess 2a, as shown in Fig. 3, e.g. CNC machined into the first layer 2. The first component 3a is at least partially arranged within the first recess 2a. The first component 3a is interconnected to the first layer 2 and maintained within the first recess 2a by means of a dielectric material such as adhesive, or a thermoplastic composite. The second component 3b is connected to the very same dielectric material. The first component 3a may be a capacitive antenna radiator and the second component 3b may be a capacitive antenna feed.

The second layer 4 may be a thin foil or comprise a thicker layer of material. In the latter case, the second layer 4 may comprise a second recess 4a, as shown in Fig. 4, the second component 3b being at least partially arranged in the second recess 4a. The first component 3a may be an invisible capacitive antenna feed.

The present invention further relates to an electronic device comprising at least a display and a functional housing structure 1 according to the above. The display and the housing structure 1 at least partially form the outer surface of the electronic device.

The various aspects and implementations have been described in conjunction with various embodiments herein. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

## Claims

1. A functional housing (1) for an electronic device, said housing (1) comprising at least a first layer (2) of dielectric or meta material and at least one electronic circuitry arrangement (3), wherein the electronic circuitry arrangement (3) comprises an antenna radiator,
at least part of said electronic circuitry arrangement (3) being embedded in said first layer (2), by means of said first layer (2) being molded around at least part of said electronic circuitry arrangement (3), wherein the functional housing further comprises
a second layer (4) of dielectric or meta material attached to said first layer (2) of dielectric or meta material, at least part of said electronic circuitry arrangement (3) being one of embedded in said second layer (4) and arranged between said first layer (2) and said second layer (4).

2. The functional housing (1) according to claim 1, wherein said functional housing (1) comprises only non-conductive layers or components and said electronic circuitry arrangement (3).

3. The functional housing (1) according to any one of the previous claims, wherein said electronic circuitry arrangement (3) comprises a first component (3a),
said first component (3a) being embedded in said first layer (2) and/or arranged between said first layer (2) and said second layer (4).

4. The functional housing (1) according to claim 3, wherein said electronic circuitry arrangement (3) further comprises at least a second component (3b), said second component (3b) being attached to and/or at least partially embedded in said first layer (2) and/or said second layer (4).

5. The functional housing (1) according to any one of the previous claims, wherein said electronic circuitry arrangement (3) comprises a capacitive coupling, a galvanic coupling or a galvanic connection (5).

6. The functional housing (1) according to claims 3 and 4, wherein said first component (3a) is an antenna radiator, and said second component (3b) is an antenna feed.

7. The functional housing (1) according to any one of claims 3 to 5, wherein at least one of said first component (3a) and said second component (3b) is a sensor.

8. The functional housing (1) according to any one of the previous claim, wherein said electronic circuitry arrangement (3) comprises at least one of a parasitic antenna element, a reflector or director for mmWave antenna, a wavetrap for antenna, a transmission line, a power divider, RF balun, filter or diode, a soldering pad, a connector, an IC component, a PCB trace, a CPU, a GPU, a RAM, a switch, a feedline, a resonator, LED or other light source for illumination.

9. The functional housing (1) according to any one of claims 4 to 8, wherein said second component (3b) extends through said second layer (4).

10. The functional housing (1) according to any one of claims 3 to 9, wherein said first layer (2) comprises a first recess (2a), said first component (3a) being at least partially arranged in said first recess (2a).

11. The functional housing (1) according to any one of claims 4 to 10, wherein said second layer (4) comprises a second recess (4a), said second component (3b) being at least partially arranged in said second recess (4a).

12. The functional housing (1) according to any one of claims 3 to 11, wherein said first component (3a) and/or said second component (3b) is attached to said first layer (2) and/or said second layer (4) by means of adhesive (6).

13. The functional housing (1) according to any one of the previous claims, wherein said first layer (2) comprises glass and/or thermoplastic composite.

14. An electronic device comprising at least a display and a functional housing (1) according to any one of claims 1 to 13, wherein said display and said functional housing (1) at least partially form an outer surface of said electronic device.

## Patentansprüche

1. Funktionsgehäuse (1) für eine elektronische Vorrichtung, wobei das Gehäuse (1) mindestens eine erste Schicht (2) aus dielektrischem oder Metamaterial und mindestens eine elektronische Schaltungsanordnung (3) umfasst, wobei die elektronische Schaltungsanordnung (3) einen Antennenstrahler umfasst,
wobei mindestens ein Teil der elektronischen Schaltungsanordnung (3) in die erste Schicht (2) eingebettet ist, indem die erste Schicht (2) um mindestens einen Teil der elektronischen Schaltungsanordnung (3) herum geformt ist, wobei das Funktionsgehäuse ferner
eine zweite Schicht (4) aus dielektrischem oder Metamaterial umfasst, die an der ersten Schicht (2) aus dielektrischem oder Metamaterial befestigt ist, wobei mindestens ein Teil der elektronischen Schaltungsanordnung (3) entweder in die zweite Schicht (4) eingebettet oder zwischen der ersten Schicht (2) und der zweiten Schicht (4) angeordnet ist.

2. Funktionsgehäuse (1) nach Anspruch 1, wobei das Funktionsgehäuse (1) nur nichtleitende Schichten oder Komponenten und die elektronische Schaltungsanordnung (3) umfasst.

3. Funktionsgehäuse (1) nach einem der vorherigen Ansprüche, wobei die elektronische Schaltungsanordnung (3) eine erste Komponente (3a) umfasst,
wobei die erste Komponente (3a) in die erste Schicht (2) eingebettet und/oder zwischen der ersten Schicht (2) und der zweiten Schicht (4) angeordnet ist.

4. Funktionsgehäuse (1) nach Anspruch 3, wobei die elektronische Schaltungsanordnung (3) ferner mindestens eine zweite Komponente (3b) umfasst, wobei die zweite Komponente (3b) an der ersten Schicht (2) und/oder der zweiten Schicht (4) befestigt und/oder mindestens teilweise darin eingebettet ist.

5. Funktionsgehäuse (1) nach einem der vorherigen Ansprüche, wobei die elektronische Schaltungsanordnung (3) eine Kapazitätskopplung, eine Galvanikkopplung oder eine Galvanikverbindung (5) umfasst.

6. Funktionsgehäuse (1) nach Anspruch 3 und 4, wobei die erste Komponente (3a) ein Antennenstrahler und die zweite Komponente (3b) eine Antennenspeisung ist.

7. Funktionsgehäuse (1) nach einem der Ansprüche 3 bis 5, wobei mindestens eine der ersten Komponente (3a) und der zweiten Komponente (3b) ein Sensor ist.

8. Funktionsgehäuse (1) nach einem der vorhergehenden Ansprüche, wobei die elektronische Schaltungsanordnung (3) mindestens eines von einem parasitären Antennenelement, einem Reflektor oder Direktor für eine mmWave-Antenne, einer Wellenfalle für eine Antenne, einer Übertragungsleitung, einem Leistungsteiler, einem HF-Balun, einem Filter oder einer Diode, einem Lötpad, einem Verbinder, einer IC-Komponente, einer Leiterbahn, einer CPU, einer GPU, einem RAM, einem Schalter, einer Speiseleitung, einem Resonator, einer LED oder einer anderen Lichtquelle zur Beleuchtung umfasst.

9. Funktionsgehäuse (1) nach einem der Ansprüche 4 bis 8, wobei sich die zweite Komponente (3b) durch die zweite Schicht (4) erstreckt.

10. Funktionsgehäuse (1) nach einem der Ansprüche 3 bis 9, wobei die erste Schicht (2) eine erste Aussparung (2a) umfasst, wobei die erste Komponente (3a) mindestens teilweise in der ersten Aussparung (2a) angeordnet ist.

11. Funktionsgehäuse (1) nach einem der Ansprüche 4 bis 10, wobei die zweite Schicht (4) eine zweite Aussparung (4a) umfasst, wobei die zweite Komponente (3b) mindestens teilweise in der zweiten Aussparung (4a) angeordnet ist.

12. Funktionsgehäuse (1) nach einem der Ansprüche 3 bis 11, wobei die erste Komponente (3a) und/oder die zweite Komponente (3b) durch Klebstoff (6) an der ersten Schicht (2) und/oder der zweiten Schicht (4) befestigt ist.

13. Funktionsgehäuse (1) nach einem der vorhergehenden Ansprüche, wobei die erste Schicht (2) Glas und/oder thermoplastischen Verbundstoff umfasst.

14. Elektronische Vorrichtung, umfassend mindestens eine Anzeige und ein Funktionsgehäuse (1) nach einem der Ansprüche 1 bis 13, wobei die Anzeige und das Funktionsgehäuse (1) mindestens teilweise eine Außenfläche der elektronischen Vorrichtung bilden.

## Revendications

1. Boîtier fonctionnel (1) pour un dispositif électronique, ledit boîtier (1) comprenant au moins une première couche (2) de matériau diélectrique ou métamatériau et au moins un agencement de circuits électronique (3), dans lequel l'agencement de circuits électronique (3) comprend un radiateur d'antenne,
au moins une partie dudit agencement de circuits électronique (3) étant intégrée dans ladite première couche (2), par le biais de ladite première couche (2) étant moulée autour d'au moins une partie dudit agencement de circuits électronique (3), dans lequel le boîtier fonctionnel comprend également
une seconde couche (4) de matériau diélectrique ou métamatériau fixée à ladite première couche (2) de matériau diélectrique ou métamatériau, au moins une partie dudit agencement de circuits électronique (3) étant intégrée dans ladite seconde couche (4) et agencée entre ladite première couche (2) et ladite seconde couche (4).

2. Boîtier fonctionnel (1) selon la revendication 1, dans lequel ledit boîtier fonctionnel (1) ne comprend que des couches ou composants non conducteurs et ledit agencement de circuits électronique (3).

3. Boîtier fonctionnel (1) selon l'une quelconque des revendications précédentes, dans lequel ledit agencement de circuits électronique (3) comprend un premier composant (3a),
ledit premier composant (3a) étant intégré dans ladite première couche (2) et/ou agencé entre ladite première couche (2) et ladite seconde couche (4).

4. Boîtier fonctionnel (1) selon la revendication 3, dans lequel ledit agencement de circuits électronique (3) comprend également au moins un second composant (3b), ledit second composant (3b) étant fixé et/ou au moins partiellement intégré dans ladite première couche (2) et/ou ladite seconde couche (4).

5. Boîtier fonctionnel (1) selon l'une quelconque des revendications précédentes, dans lequel ledit agencement de circuits électronique (3) comprend un couplage capacitif, un couplage galvanique ou une connexion galvanique (5).

6. Boîtier fonctionnel (1) selon les revendications 3 et 4, dans lequel ledit premier composant (3a) est un radiateur d'antenne et ledit second composant (3b) est une alimentation d'antenne.

7. Boîtier fonctionnel (1) selon l'une quelconque des revendications 3 à 5, dans lequel au moins l'un dudit premier composant (3a) et dudit second composant (3b) est un capteur.

8. Boîtier fonctionnel (1) selon l'une quelconque des revendications précédentes, dans lequel ledit agencement de circuits électronique (3) comprend au moins l'un d'un élément d'antenne parasite, d'un réflecteur ou directeur pour antenne mmWave, d'un piège à ondes pour antenne, d'une ligne de transmission, d'un diviseur de puissance, d'un symétriseur RF, d'un filtre ou d'une diode, d'une pastille de soudure, d'un connecteur, d'un composant IC, d'une piste PCB, d'une CPU, d'une GPU, d'une RAM, d'un commutateur, d'une ligne d'alimentation, d'un résonateur, d'une DEL ou d'une autre source de lumière pour l'éclairage.

9. Boîtier fonctionnel (1) selon l'une quelconque des revendications 4 à 8, dans lequel ledit second composant (3b) se prolonge à travers ladite seconde couche (4).

10. Boîtier fonctionnel (1) selon l'une quelconque des revendications 3 à 9, dans lequel ladite première couche (2) comprend un premier évidement (2a), ledit premier composant (3a) étant au moins partiellement agencé dans ledit premier évidement (2a).

11. Boîtier fonctionnel (1) selon l'une quelconque des revendications 4 à 10, dans lequel ladite seconde couche (4) comprend un second évidement (4a), ledit second composant (3b) étant au moins partiellement agencé dans ledit second évidement (4a).

12. Boîtier fonctionnel (1) selon l'une quelconque des revendications 3 à 11, dans lequel ledit premier composant (3a) et/ou ledit second composant (3b) est fixé à ladite première couche (2) et/ou à ladite seconde couche (4) par le biais d'un adhésif (6).

13. Boîtier fonctionnel (1) selon l'une quelconque des revendications précédentes, dans lequel ladite première couche (2) comprend du verre et/ou un composite thermoplastique.

14. Dispositif électronique comprenant au moins un écran et un boîtier fonctionnel (1) selon l'une quelconque des revendications 1 à 13, dans lequel ledit écran et ledit boîtier fonctionnel (1) forment au moins partiellement une surface externe dudit dispositif électronique.
